# FASCICULE DE BREVET EUROPEEN

(11) **EP 2 223 047 B1**
(45) Date de publication et mention de la délivrance du brevet: **25.05.2011**
(21) Numéro de dépôt: 08867172.2
(22) Date de dépôt: 02.12.2008
(51) Int. Cl.: G01C 25/00

(54) **PROCEDE D'ALIGNEMENT AUTONOME D'UNITE DE MESURE INERTIELLE POUR INSTRUMENT DE BORD D'AERONEF.**
VERFAHREN ZUR UNABHÄNGIGEN AUSRICHTUNG EINER TRÄGHEITSEINHEIT FÜR EIN FLUGZEUGBORDINSTRUMENT
METHOD FOR INDEPENDENT ALIGNMENT OF AN INERTIAL UNIT FOR AN ONBOARD INSTRUMENT OF AN AIRCRAFT

(30) Priorité: 21.12.2007 FR 0709042
(43) Date de publication de la demande: 01.09.2010
(73) Titulaire: Thales, 92526 Neuilly Sur Seine (FR)
(72) Inventeur: KERBIQUET, Anne, F-86100 Chatellerault (FR); BRESCIANI, Johan, F-86100 Chatellerault (FR); MULHAUPT, Gaël, F-86000 Poitiers (FR); CHESNE, Philippe, F-41100 Vendome (FR)
(74) Mandataire: Lucas, Laurent Jacques
(86) Numéro de dépôt international: PCT/EP2008/066642
(87) Numéro de publication internationale: WO 2009/083373

(56) Documents cités:
- WO-A-2006/025825
- GB-A- 955 175
- GB-A- 978 710
- US-A- 4 303 978

## Description

L'invention concerne un procédé d'alignement autonome d'unité de mesure inertielle pour instrument de bord pouvant équiper un aéronef. L'invention concerne en particulier un procédé d'alignement autonome d'unité de mesure inertielle pour instrument de secours générant et affichant des informations de vitesse, d'altitude et d'attitude de l'aéronef. Elle trouve une utilité particulière pour l'alignement d'unités de mesure inertielle dans toutes les conditions possibles d'alignement. En particulier, l'invention est adaptée pour équiper des aéronefs pouvant décoller à partir de plates-formes non stabilisées, comme des plates-formes pétrolières, des porte-avions ou des porte-hélicoptères. Elle peut également s'appliquer pour l'alignement d'unités de mesure inertielle équipant des aéronefs décollant de plates-formes stables, comme une piste d'atterrissage, dans la mesure où l'aéronef peut être soumis à des mouvements, même à l'arrêt, par exemple à cause du vent ou des servitudes autour de l'aéronef. Elle peut encore s'appliquer pour l'alignement des unités de mesure inertielle lorsque l'aéronef est en vol.

Les instruments de secours sont des instruments de bord autonomes générant et affichant des informations de vol essentielles au pilote d'un aéronef en cas de défaillance d'instruments de bord primaires. Ces informations de vol, obtenues généralement avec une moindre précision que celle des instruments de bord primaires, concernent essentiellement la vitesse, l'altitude et l'attitude de l'aéronef. Afin de garantir l'autonomie des instruments de secours vis-à-vis des instruments de bord primaires, les instruments de secours doivent disposer de leurs propres capteurs afin de générer et d'afficher la vitesse, l'altitude et l'attitude de l'aéronef. En particulier, les instruments de secours comportent habituellement un capteur de pression statique, un capteur de pression totale et une unité de mesure inertielle. Les capteurs de pression statique et totale sont respectivement reliés à une prise de pression statique et à une prise de pression totale situées sur la peau de l'aéronef. La pression statique permet de déterminer l'altitude de l'aéronef. La différence entre la pression totale et la pression statique permet de déterminer la vitesse de l'aéronef par rapport à l'air. L'unité de mesure inertielle comprend par exemple 3 gyromètres et 2 ou 3 accéléromètres. Les gyromètres mesurent les vitesses de rotation du repère du capteur, en l'occurrence un système d'axes lié à l'instrument de secours, par rapport à un repère inertiel. Par intégration des vitesses de rotation, il est possible de connaître l'orientation de l'instrument de secours par rapport au repère inertiel et donc, connaissant l'orientation de l'instrument de secours par rapport à l'aéronef et l'orientation du repère géographique local par rapport au repère inertiel, il est possible de connaître l'orientation de l'aéronef par rapport au repère géographique local. L'orientation de l'aéronef par rapport au repère géographique local, appelée attitude de l'aéronef, est repérée par rapport à un axe de roulis, un axe de tangage et un axe de lacet et les mouvements autour de ces axes sont appelés respectivement le roulis, le tangage et le lacet. Les accéléromètres mesurent des forces non gravitationnelles appliquées à l'aéronef, dont on déduit des accélérations de translation du repère du capteur par rapport au repère inertiel. La combinaison des gyromètres et des accéléromètres permet une détermination précise de l'attitude de l'aéronef, les données fournies par les accéléromètres étant utilisées préférentiellement aux données fournies par les gyromètres dans les phases statiques ou quasi-statiques de vol, et les données fournies par les gyromètres étant utilisées préférentiellement aux données fournies par les accéléromètres lors des phases dynamiques du vol.

Lors de la mise sous tension d'un aéronef et en particulier d'un instrument de secours, l'unité de mesure inertielle de l'instrument de secours doit être initialisée afin de fournir des informations d'attitude les plus fiables possibles au cours du vol. Cette initialisation comprend une phase d'alignement consistant notamment à estimer une dérive de chaque gyromètre, c'est-à-dire une vitesse de rotation mesurée par le gyromètre considéré en l'absence de tout mouvement de celui-ci. Les gyromètres étant des capteurs électroniques, leur dérive peut différer entre deux mises sous tension de l'unité de mesure inertielle, au point de rendre inutilisable toute mesure effectuée par ces gyromètres et donc toute attitude affichée par l'instrument de secours. Il est donc nécessaire de déterminer la dérive des gyromètres à chaque mise sous tension. Cependant, la mise sous tension de l'instrument de secours peut intervenir alors que l'aéronef est posé sur une plate-forme stable, par exemple une piste d'atterrissage, sur une plate-forme instable, par exemple une plate-forme pétrolière, un porte-avions ou un porte-hélicoptères, ou même alors qu'il est en vol, après une coupure plus ou moins brève de l'alimentation électrique de l'instrument de secours. Lorsque l'aéronef est posé sur une plate-forme instable ou lorsqu'il est en vol, l'alignement de l'unité de mesure inertielle prend en compte des mesures de dérives dues, non seulement aux dérives intrinsèques de l'unité de mesure inertielle, mais également à des mouvements de l'aéronef. En particulier, l'alignement peut prendre en compte des mouvements de houle lorsque l'aéronef est posé sur une plate-forme pétrolière et des mouvements dus à des perturbations atmosphériques lorsqu'il est en vol. Par conséquent, l'alignement peut être faussé par les mouvements de l'aéronef.

Pour assurer l'alignement correct de l'unité de mesure inertielle, il est connu de vérifier la présence ou l'absence de mouvements de l'unité de mesure inertielle au moyen des accéléromètres de l'unité de mesure inertielle. Pendant toute la durée de l'alignement, les accéléromètres mesurent les forces non gravitationnelles de l'unité de mesure inertielle par rapport au repère inertiel. En cas de mouvement de l'unité de mesure inertielle au cours de l'alignement, mesuré par les accéléromètres, l'instrument de secours, à la fin de l'alignement, invalide la détermination de la dérive de chaque gyromètre, affiche un message indiquant au pilote la détection de mouvement et demande au pilote de relancer l'alignement soit en éteignant et remettant sous tension l'instrument de secours, soit en pressant un bouton sur la face avant de l'instrument de secours. Cette relance de l'alignement est impérative dans la mesure où la disponibilité de l'instrument de secours, et donc de l'alignement de l'unité de mesure inertielle, est une condition nécessaire à l'autorisation de décollage de l'aéronef.

Une telle solution présente plusieurs inconvénients. Un premier inconvénient est l'attente de la fin de l'alignement pour indiquer la détection d'un mouvement au cours de l'alignement. Ce n'est donc qu'à la fin de l'alignement des gyromètres que le pilote a connaissance de l'invalidation de l'alignement et peut le relancer. Par conséquent, le temps écoulé entre la détection de mouvement et la fin de l'alignement est perdu. Un deuxième inconvénient est la perte de l'estimation des dérives effectuée entre le début de l'alignement et la détection d'un mouvement. A la fin de l'alignement invalidé, toute la procédure d'alignement est relancée, la dérive estimée risquant d'avoir été faussée par le mouvement de l'unité de mesure inertielle. A plus forte raison, si l'alignement est relancé par une remise à zéro matérielle, c'est-à-dire en éteignant et remettant sous tension l'instrument de secours, la dérive des gyromètres risque de changer, rendant obsolète la détermination précédente des dérives. Un troisième inconvénient est l'impossibilité, dans certaines situations, de pouvoir effectuer un alignement. Le cas de figure peut notamment se présenter lorsque l'aéronef est démarré sur une plate-forme mouvante. Dans la plupart des cas, le mouvement de la plate-forme, par exemple dû à la houle de la mer, ne peut être empêché. L'aéronef doit alors attendre la cessation des mouvements, en l'occurrence une accalmie de la houle, pour pouvoir décoller. Une telle immobilisation est incontestablement néfaste à la rentabilité des aéronefs. De même, lorsque l'aéronef est en vol, l'instrument de secours risque d'être soumis à des mouvements dus au pilotage de l'aéronef et à des perturbations de l'air entourant l'aéronef. Bien que le pilote puisse limiter les mouvements dus au pilotage de l'aéronef, il ne peut empêcher les mouvements dus aux perturbations de l'air. L'alignement de l'unité de mesure inertielle ne peut alors être effectué.

Le document WO 2006/025825 A1 décrit un procédé d'alignement d'une centrale inertielle utilisant soit ses données internes lorsqu'elle est stable, soit une combinaison de ses données internes et de données provenant de sources extérieures lorsque la centrale inertielle est instable. Le document GB 978,710 A décrit un procédé d'alignement d'une centrale inertielle dans lequel le pilote sélectionne manuellement soit un alignement de type vol, soit un alignement de type sol.

Un but de l'invention est notamment de pallier tout ou partie des inconvénients précités. A cet effet, l'invention a pour objet un procédé d'alignement autonome d'unité de mesure inertielle pour instrument de bord pouvant équiper un aéronef, caractérisé en ce qu'il comprend les étapes suivantes :
- déterminer un état de l'aéronef, à savoir si l'aéronef est en vol ou non,
- dans le cas où l'aéronef est détecté en vol :
   o effectuer un alignement de type vol,
- dans le cas où l'aéronef n'est pas détecté en vol :
   o déterminer une stabilité de l'aéronef, à savoir si l'aéronef est au sol ou en mer,
   o dans le cas où l'aéronef est détecté au sol :
      ■ effectuer un alignement de type sol,
   o dans le cas où l'aéronef est détecté en mer :
      ■ effectuer un alignement de type mer.

L'invention a notamment pour avantage qu'elle permet de faire aboutir l'alignement avec une même précision quelles que soient les conditions dans lesquelles se trouve l'aéronef, l'alignement étant adapté à ces conditions.

L'invention sera mieux comprise et d'autres avantages apparaîtront à la lecture de la description détaillée d'un mode de réalisation donné à titre d'exemple, description faite en regard de dessins annexés qui représentent :
- la figure 1, un instrument de secours pouvant équiper un aéronef ;
- la figure 2, un aéronef équipé de l'instrument de secours représenté sur la figure 1, l'aéronef et l'instrument de secours possédant chacun un système d'axes ;
- la figure 3, un synoptique des moyens mis en oeuvre par l'instrument de secours pour le calcul et l'affichage de l'attitude de l'aéronef ;
- la figure 4, des étapes mises en oeuvre pour l'alignement de l'instrument de secours ;
- la figure 5, un exemple d'étapes mises en oeuvre selon l'invention pour l'alignement de l'instrument de secours ;
- la figure 6, un exemple de sous-étapes mises en oeuvre selon l'invention pour l'alignement de l'instrument de secours au cours d'un vol de l'aéronef ;
- la figure 7, un exemple de sous-étapes mises en oeuvre selon l'invention pour l'alignement de l'instrument de secours après une longue coupure d'alimentation au cours d'un vol de l'aéronef ;
- la figure 8, sous forme de chronogramme, un exemple d'alignement de l'instrument de secours au cours d'un vol de l'aéronef ;
- la figure 9, sous forme de chronogramme, un exemple d'alignement au sol de l'instrument de secours selon un premier mode de réalisation ;
- la figure 10, sous forme de chronogramme, un exemple d'alignement en mer de l'instrument de secours selon le premier mode de réalisation ;
- la figure 11, sous forme de chronogramme, un exemple d'alignement au sol de l'instrument de secours selon un deuxième mode de réalisation ;
- la figure 12, sous forme de chronogramme, un exemple d'alignement en mer de l'instrument de secours selon le deuxième mode de réalisation ;
- la figure 13, sous forme de chronogramme, un exemple d'alignement au sol de l'instrument de secours selon un troisième mode de réalisation ;
- la figure 14, sous forme de chronogramme, un exemple d'alignement en mer de l'instrument de secours selon le troisième mode de réalisation.

La description qui suit est faite en rapport à un instrument de secours. Il est bien entendu possible de mettre en oeuvre l'invention à partir de tout instrument de bord comportant une unité de mesure inertielle.

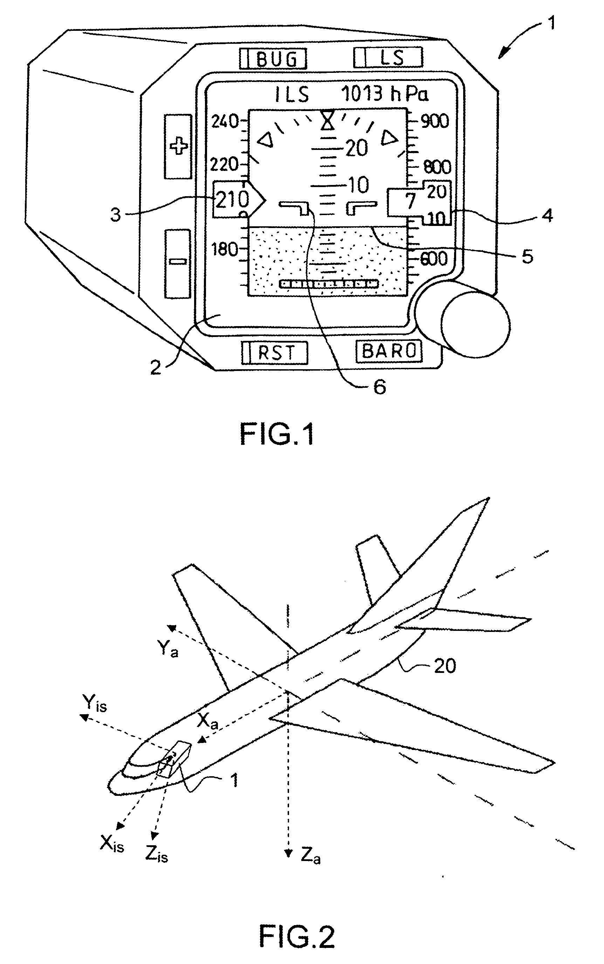

La figure 1 représente un instrument de secours 1 pouvant équiper un aéronef. L'instrument de secours 1 comporte un afficheur 2, par exemple un écran à cristaux liquides. L'afficheur 2 affiche des informations de vol essentielles pour le pilotage de l'aéronef. Ces informations concernent notamment la vitesse air, l'altitude et l'attitude de l'aéronef. La vitesse air et l'altitude de l'aéronef sont représentées sous forme d'échelles graduées verticales tournantes, une échelle 3 indiquant la vitesse air de l'aéronef et une échelle 4 indiquant l'altitude de l'aéronef. L'attitude de l'aéronef est symbolisée par une ligne d'horizon mobile 5 par rapport à une silhouette fixe 6 représentant l'aéronef. Les informations de vitesse air et d'altitude sont obtenues à partir de capteurs anémo-barométriques reliés d'une part à des prises de pression disposées sur la peau de l'aéronef et d'autre part à un calculateur. Les capteurs anémo-barométriques fournissent une pression statique Ps et une pression totale Pt de l'air entourant l'aéronef à partir desquelles le calculateur détermine la vitesse air et l'altitude de l'aéronef. L'attitude de l'aéronef est obtenue à partir d'une unité de mesure inertielle comprenant des gyromètres et des accéléromètres, comme expliqué plus loin. Les capteurs anémo-barométriques, l'unité de mesure inertielle et le calculateur forment des moyens de détermination des paramètres de vol. Ces moyens de détermination sont autonomes car ils appartiennent à l'instrument de secours 1 et peuvent fonctionner sans autre information extérieure que celles provenant des prises de pression.

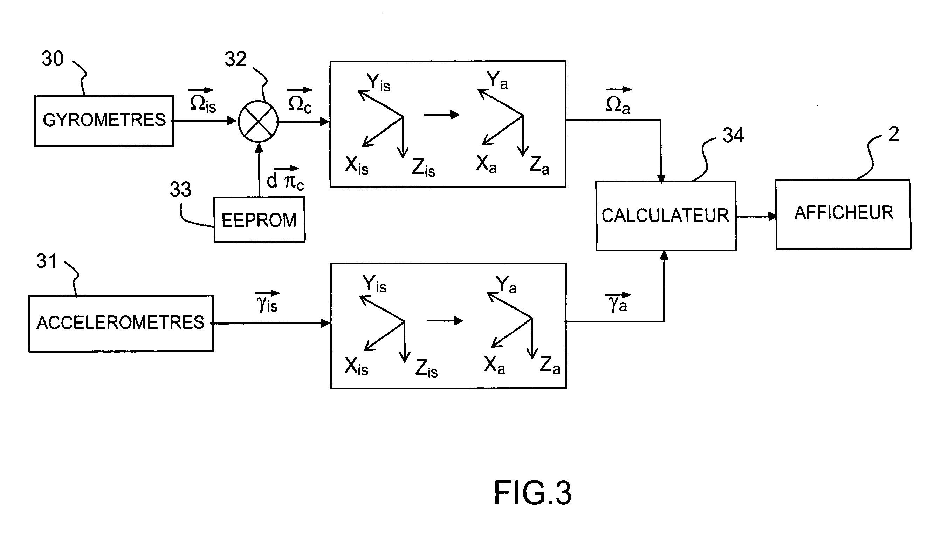

La figure 2 représente un aéronef 20 équipé de l'instrument de secours 1 et la figure 3 représente un synoptique des moyens mis en oeuvre par l'instrument de secours 1 pour le calcul et l'affichage de l'attitude de l'aéronef 20. L'unité de mesure inertielle de l'instrument de secours 1 comprend généralement 3 gyromètres 30 et 3 accéléromètres 31. Les gyromètres 30 mesurent des vitesses angulaires 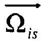 d'un repère *Rᵢₛ(X̅ᵢₛ, Y̅ᵢₛ, Z̅ᵢₛ)* lié à l'instrument de secours 1 par rapport à un repère inertiel. Pour la lisibilité de la description, on pourra négliger les mouvements de la terre et considérer un repère géographique local, appelé repère terrestre *Rₜ*(*X̅ₜ*, *Y̅ₜ*, *Z̅ₜ*), comme étant le repère inertiel. Pour une mise en oeuvre de l'invention, il sera toutefois possible de tenir compte des mouvements de la terre par rapport au repère inertiel. Comme représenté à la figure 3, les vitesses angulaires 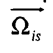 de l'unité de mesure inertielle sont corrigées au moyen d'un opérateur 32 de dérives internes 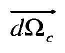 de l'unité de mesure inertielle, le vecteur 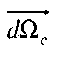 représentant les composantes des dérives internes de l'unité de mesure inertielle, par exemple une dérive par gyromètre 30. Les dérives internes 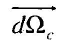 sont par exemple stockées dans une mémoire vive 33. Des moyens pour déterminer les dérives internes 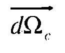 seront décrits plus loin. Les vitesses angulaires ainsi corrigées et notées 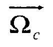 dans le repère *Rₜ(X̅ₜ, Y̅ₜ, Z̅ₜ*) sont transformées pour obtenir des vitesses angulaires 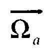 d'un repère lié à l'aéronef 20 et noté *Rₐ(X̅ₐ, Y̅ₐ, Z̅ₐ*) par rapport au repère *Rₜ(X̅ₜ, Y̅ₜ, Z̅ₜ*). De même, les accéléromètres 31 mesurent des accélérations de translation 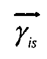 du repère *Rᵢₛ(X̅ᵢₛ, Y̅ᵢₛ, Z̅ᵢₛ*) lié à l'instrument de secours 1 par rapport au repère terrestre *Rₜ(X̅ₜ, Y̅ₜ, Z̅ₜ*) Ces accélérations de translation 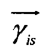 sont également transformées pour obtenir des accélérations de translation 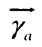 du repère *Rₐ(X̅ₐ, Y̅ₐ, Z̅ₐ*) lié à l'aéronef 20 par rapport au repère *Rₜ(X̅ₜ, Y̅ₜ, Z̅ₜ*). Les vitesses angulaires 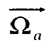 et les accélérations de translation 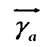 permettent de déterminer l'attitude de l'aéronef 20 par rapport au repère terrestre *Rₜ(X̅ₜ, Y̅ₜ, Z̅ₜ*) au moyen d'un calculateur 34 appartenant à l'unité de mesure inertielle. Avantageusement, le calculateur 34 effectue également les transformations de vitesses angulaires et d'accélérations de translation. Dans une forme particulière de réalisation, seules les accélérations de translation 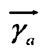 sont utilisées pour la détermination de l'attitude de l'aéronef 20 lorsqu'il est en vol stabilisé. A l'inverse, seules les vitesses angulaires 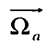 sont utilisées pour la détermination de l'attitude de l'aéronef 20 lorsqu'il est en vol dynamique. D'autres formes de réalisation sont possibles. En particulier, il est possible d'utiliser une pondération des accélérations de translation 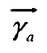 et des vitesses angulaires 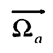 pour la détermination de l'attitude de l'aéronef 20, cette pondération pouvant varier en fonction des conditions de vol. L'attitude de l'aéronef 20 est affichée sur l'afficheur 2 de l'instrument de secours 1.

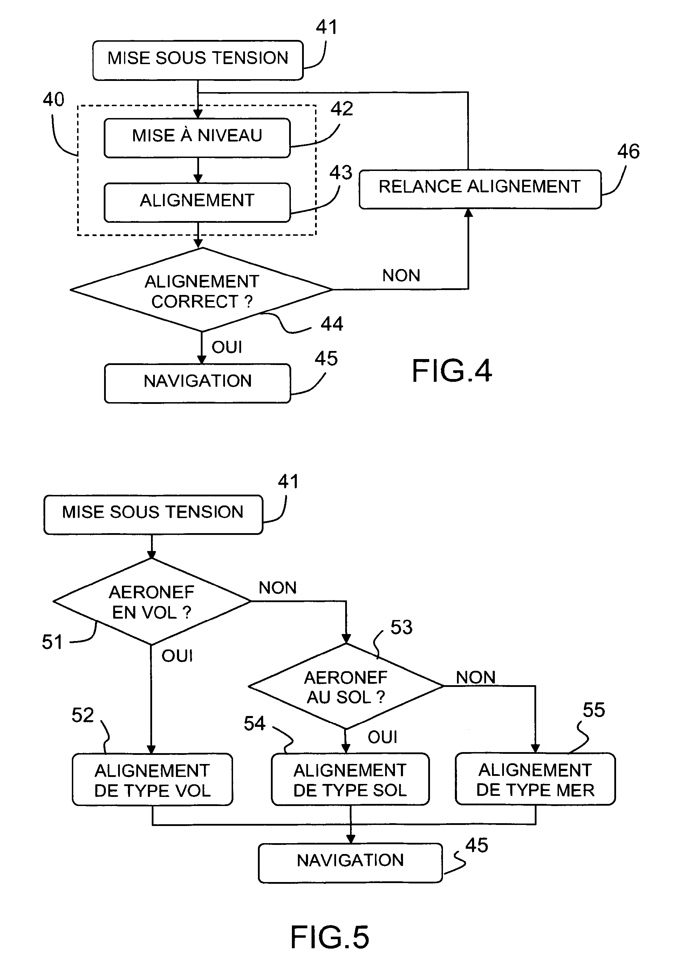

La figure 4 représente des étapes mises en oeuvre pour l'initialisation d'un instrument de secours 1. A la mise sous tension 41 de l'instrument de secours 1, une estimation grossière, appelée mise à niveau 42, des dérives internes 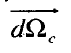 de l'unité de mesure inertielle est effectuée. Cette mise à niveau 42 permet par exemple de déterminer une valeur minimale et une valeur maximale pour chaque dérive interne de gyromètre 30. A la fin de la mise à niveau 42, un alignement fin, également appelé alignement 43, est effectué pour déterminer précisément la dérive interne de chaque gyromètre 30. L'alignement 43 comporte notamment une étape de mesure des dérives instantanées et une étape de filtrage de ces dérives pour obtenir des valeurs précises des dérives internes 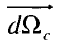 . La mise à niveau 42 et l'alignement 43 sont appelés alignement global 40. Au cours de cet alignement global 40, les accéléromètres 31 surveillent les mouvements de l'unité de mesure inertielle. A l'issue de l'alignement 43, une étape de contrôle 44 examine si les mouvements détectés par les accéléromètres 31 n'ont pas dépassé un seuil prédéfini et si les dérives internes 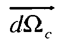 se trouvent entre les valeurs minimales et maximales déterminées lors de la mise à niveau 42. Si tel est le cas, les dérives internes 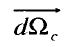 sont enregistrées dans la mémoire vive 33 de l'instrument de secours 1. L'instrument de secours 1 est prêt pour la navigation 45 et affiche les informations d'attitude de l'aéronef 20. Dans tous les autres cas, les dérives internes 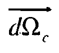 sont invalidées et l'alignement global 40 est relancé selon le repère 46.

Les étapes mises en oeuvre à la figure 4 ne permettent pas un alignement global 40 dans toutes les situations dans lesquelles l'aéronef 20 peut se trouver. En particulier, lorsque les mouvements sont répétés, par exemple parce que l'aéronef 20 se trouve sur une plate-forme mouvante ou parce qu'il est en vol, l'alignement global 40 est toujours relancé et l'instrument de secours 1 reste indisponible.

Le procédé selon l'invention permet de remédier à cet inconvénient par des étapes représentées à la figure 5. A la mise sous tension 41 de l'instrument de secours 1, on détermine dans une étape 51 un état de l'aéronef 20, à savoir si l'aéronef 20 est en vol ou non. Dans le cas où l'aéronef 20 est détecté en vol, on effectue un alignement de type vol 52. Dans le cas où l'aéronef 20 n'est pas détecté en vol, on détermine dans une étape 53 une stabilité de l'aéronef 20, à savoir si l'aéronef 20 est au sol ou en mer. L'expression "aéronef au sol" correspond à une situation dans laquelle l'aéronef 20 est posé sur un support stable, par exemple une piste d'atterrissage ou le toit d'un immeuble. L'expression "aéronef en mer", par opposition, correspond à une situation dans laquelle l'aéronef 20 est posé sur un support instable, par exemple une plate-forme pétrolière, un porte-avions, un porte-hélicoptère ou toute autre plate-forme mouvante. Dans le cas où l'aéronef 20 est détecté au sol, on effectue un alignement de type sol 54. Dans le cas où l'aéronef 20 n'est pas détecté au sol, c'est-à-dire s'il est détecté en mer, on effectue un alignement de type mer 55. A l'issue de l'alignement de type vol 52, de l'alignement de type sol 54 ou de l'alignement de type mer 55, l'instrument de secours 1 peut être utilisé pour la détermination et l'affichage de l'attitude de l'aéronef 20 selon le repère 45.

Dans une forme particulière de réalisation, l'alignement de type vol 52, l'alignement de type sol 54 et l'alignement de type mer 55 comprennent une étape de détermination des dérives internes 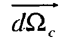 de l'unité de mesure inertielle. Ces dérives internes 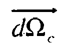 peuvent être enregistrées dans la mémoire vive 33 de l'instrument de secours 1 à la fin des alignements de type vol 52, de type sol 54 et de type mer 55.

Dans une forme particulière de réalisation, l'état de l'aéronef 20 est déterminé par une information provenant d'un train d'atterrissage de l'aéronef 20 et indiquant si des roues du train d'atterrissage sont en contact avec un support. L'état de l'aéronef 20 peut également être déterminé par une vitesse de l'air entourant l'aéronef 20. Cette vitesse air peut être fournie de façon autonome par les capteurs anémo-barométriques de l'unité de mesure inertielle. L'aéronef 20 est par exemple considéré en vol lorsque la vitesse air dépasse 25,7 mètres par seconde (50 noeuds).

Dans une forme particulière de réalisation, la stabilité de l'aéronef 20 est déterminée par un ou plusieurs accéléromètres, un ou plusieurs gyromètres ou une combinaison d'accéléromètres et de gyromètres. Avantageusement, les accéléromètres 31 et les gyromètres 30 de l'unité de mesure inertielle sont utilisés.

Dans une forme particulière de réalisation, la stabilité de l'aéronef 20 est déterminée par la présence ou l'absence d'une rotation autour d'un axe de lacet de l'aéronef 20, d'une translation suivant cet axe de lacet, un axe de roulis et/ou un axe de tangage de l'aéronef 20 ou encore par une combinaison de cette rotation et de ces translations. Ces axes de roulis, de tangage et de lacet sont par exemple les axes *X̅ₐ*, *Y̅ₐ* et *Z̅ₐ* respectivement. La présence ou l'absence de la rotation et des translations peut être déterminée par un seuil prédéfini, une rotation ou une translation étant présente lorsque sa valeur dépasse ce seuil prédéfini et absente sinon. Elle peut également être déterminée par deux seuils prédéfinis, l'un négatif et l'autre positif. Dans ce cas, une rotation ou une translation est présente lorsque sa valeur n'est pas comprise entre ces deux seuils prédéfinis.

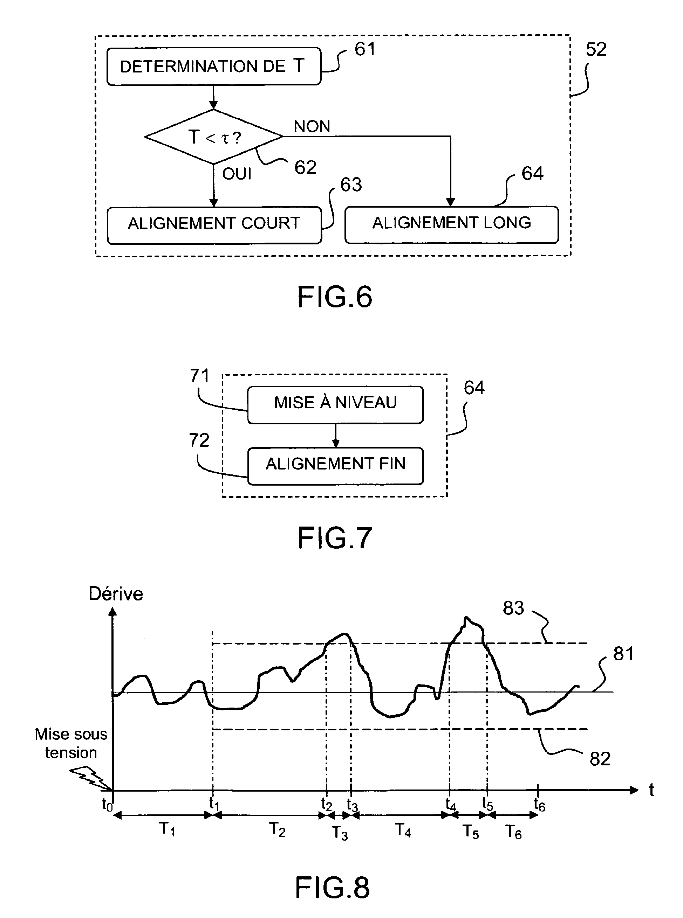

Dans une forme particulière de réalisation, représentée à la figure 6, l'alignement de type vol 52 peut être effectué différemment en fonction d'une durée *T* représentant le temps écoulé entre une mise sous tension de l'instrument de secours 1 et une mise hors tension précédant immédiatement la mise sous tension. Dans une étape 61, on détermine la durée T. Dans une étape 62, on détermine si cette durée T est inférieure ou supérieure à une durée τ prédéterminée, par exemple d'une ou deux minutes. Dans le cas où la durée T est inférieure à la durée τ , on effectue un alignement court 63. Dans le cas où la durée T est supérieure ou égale à la durée τ , on effectue un alignement long 64. Cette forme de réalisation permet de tenir compte d'une caractéristique des gyromètres 30 selon laquelle leur dérive interne peut différer entre deux mises sous tension. Une différence de dérive interne est due, notamment, à une différence de température interne de l'instrument de secours 1. Par conséquent, on peut estimer qu'après une courte interruption d'alimentation de l'instrument de secours 1, les dérives internes 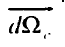 évoluent moins qu'après une longue interruption. Selon cette forme de réalisation, l'alignement court 63 peut comprendre une étape consistant à réutiliser des dérives internes 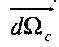 précédemment déterminées. Avantageusement, les dérives internes 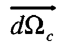 sont gardées dans la mémoire vive 33, l'attitude de l'aéronef 20 pouvant être directement déterminée par l'instrument de secours 1 à sa mise sous tension. Toujours selon cette forme de réalisation, l'alignement long 64 peut comprendre une étape de détermination de valeurs minimale et maximale pour chaque dérive interne de gyromètre 30, appelée mise à niveau 71, et une étape de détermination précise des dérives internes 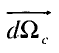 , appelée alignement fin 72. La mise à niveau 71 peut comprendre une mesure des dérives instantanées des gyromètres 30, une détermination d'une valeur moyenne pour chaque dérive interne, et une détermination de valeurs minimale et maximale pour chaque dérive interne à partir de la valeur moyenne correspondante et d'intervalles prédéterminés, les moitiés de ces intervalles prédéterminés étant ajoutées ou soustraites aux valeurs moyennes pour déterminer respectivement les valeurs minimales et maximales. Avantageusement, l'alignement fin 72 ne prend pas en compte les dérives instantanées non comprises entre les valeurs minimales et maximales respectives des dérives internes 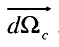 . Cette forme de réalisation est illustrée à la figure 8.

La figure 8 présente, sous forme de chronogramme, un exemple d'alignement long 64 d'instrument de secours 1. Le temps est représenté en abscisse et une mesure instantanée d'une dérive interne de gyromètre 30 est représentée en ordonnée. Une valeur réelle 81 de la dérive interne, déterminée par l'alignement fin 72 mais inconnue jusqu'à la fin de cet alignement fin 72, est représentée par une droite. A la mise sous tension 41 de l'instrument de secours 1 à un instant t₀, on effectue la mise à niveau 71 de l'unité de mesure inertielle pendant une durée T₁, généralement une dizaine de secondes. Cette mise à niveau 71 permet de définir une valeur minimale 82 et une valeur maximale 83 pour la dérive interne de gyromètre 30, cette dérive interne devant être déterminée entre ces valeurs minimale 82 et maximales 83. A la fin de la mise à niveau 71, à un instant t₁, on effectue pendant une durée T₂ l'alignement fin 72 de l'unité de mesure inertielle jusqu'à un instant t₂ à partir duquel la mesure instantanée de la dérive interne devient supérieure à la valeur maximale 83. Pendant toute la durée T₃ où la mesure instantanée de la dérive interne est supérieure à la valeur maximale 83, cette mesure instantanée n'est pas prise en compte pour la détermination de la dérive interne. A un instant t₃, lorsque la mesure instantanée devient inférieure à la valeur maximale 83, l'alignement fin 72 reprend pendant une durée T₄, soit jusqu'à un instant t₄ où la mesure instantanée de la dérive interne redevient supérieure à la valeur maximale 83. Pendant toute la durée T₅ où la mesure instantanée de la dérive interne est supérieure à la valeur maximale 83, cette mesure instantanée n'est pas prise en compte pour la détermination de la dérive interne. A un instant t₅, lorsque la mesure instantanée redevient inférieure à la valeur maximale 83, l'alignement fin 72 reprend pendant une durée T₆, soit jusqu'à un instant t₆ où l'alignement fin 72 prend fin. Le même mécanisme d'interruption de prise en compte de la mesure instantanée d'une dérive interne peut être appliqué pour tous les gyromètres 30 et, en particulier, pour toutes leurs dérives internes 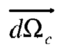 . En d'autres termes, cette interruption permet de ne pas prendre en compte des mouvements de forte amplitude de l'aéronef 20 pendant l'alignement de son unité de mesure inertielle.

Dans une forme particulière de réalisation, les durées de l'alignement de type sol 54, de l'alignement de type mer 55 et de l'alignement long 64 sont des durées prédéterminées. Avantageusement, les durées de l'alignement de type mer 55 et de l'alignement long 64 sont supérieures à la durée de l'alignement de type sol 54. Cette forme de réalisation permet de moyenner les mouvements de l'aéronef 20 en mer ou en vol sur une plus longue durée afin d'obtenir une précision équivalente à celle de l'alignement de type sol 54.

Dans une forme particulière de réalisation, dans le cas où l'aéronef 20 n'est pas détecté en vol, le procédé selon l'invention comprend, en outre, une étape de détermination de valeurs minimale et maximale pour chaque dérive interne de gyromètre 30, appelée mise à niveau à terre. Cette mise à niveau à terre peut être identique à la mise à niveau 71 de l'alignement long 64.

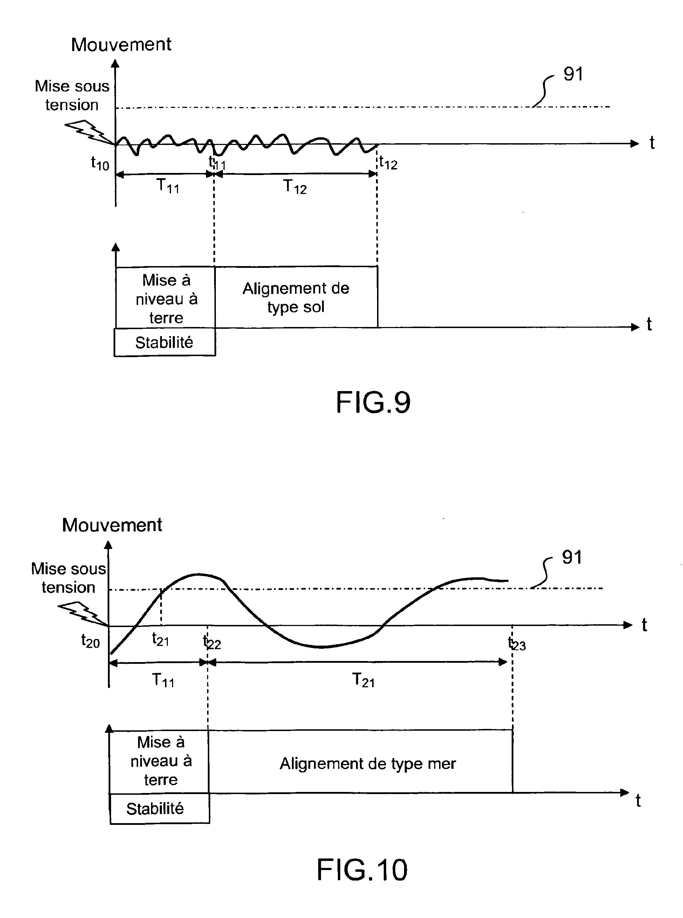

Pour la suite de la description, on considère les figures 9 à 14. Ces figures présentent sous forme de chronogrammes des exemples d'alignement de l'unité de mesure inertielle selon différents modes de réalisation dans le cas où l'aéronef 20 n'est pas détecté en vol. Dans chaque figure, un chronogramme supérieur représente un mouvement de l'unité de mesure inertielle en fonction d'un temps t et un chronogramme inférieur présente la succession des étapes du procédé selon ce même temps t. Le mouvement est par exemple une translation déterminée par un accéléromètre 31. Le mouvement peut également être une rotation déterminée par un gyromètre 30 ou une combinaison de translations et de rotations. Dans chaque figure, un seuil prédéfini 91 permet de déterminer la présence ou l'absence de mouvement de l'unité de mesure inertielle. Les figures portant un numéro impair correspondent à une situation où l'aéronef 20 est au sol et les figures portant un numéro pair correspondent à une situation où l'aéronef 20 est en mer.

Selon un premier mode de réalisation, illustré par les figures 9 et 10, dans le cas où l'aéronef 20 n'est pas détecté en vol, les étapes suivantes sont effectuées successivement :
- simultanément :
   o effectuer la mise à niveau à terre,
   o déterminer la stabilité de l'aéronef 20 pendant toute la durée de la mise à niveau à terre,
- dans le cas où l'aéronef 20 est détecté en mer :
   o effectuer l'alignement de type mer 55,
- dans le cas contraire :
   o effectuer l'alignement de type sol 54.

Comme représenté à la figure 9, à la mise sous tension 41 de l'instrument de secours 1 à un instant t₁₀, on effectue la mise à niveau à terre pendant une durée T₁₁. Pendant toute cette durée T₁₁, on détermine la stabilité de l'aéronef 20. A l'instant t₁₁, aucun mouvement n'ayant dépassé le seuil prédéfini 91, on effectue un alignement de type sol 54 pendant une durée T₁₂ jusqu'à un instant t₁₂.

La figure 10 illustre ce premier mode de réalisation alors que l'aéronef 20 est en mer. A la mise sous tension 41 de l'instrument de secours 1 à un instant t₂₀, on effectue pareillement la mise à niveau à terre pendant la durée T₁₁ et on détermine la stabilité de l'aéronef 20. A un instant t₂₁, un mouvement dépasse le seuil prédéfini 91. Par conséquent, à la fin de la mise à niveau à terre à un instant t₂₂, on effectue un alignement de type mer 55 pendant une durée T₂₁ jusqu'à un instant t₂₃.

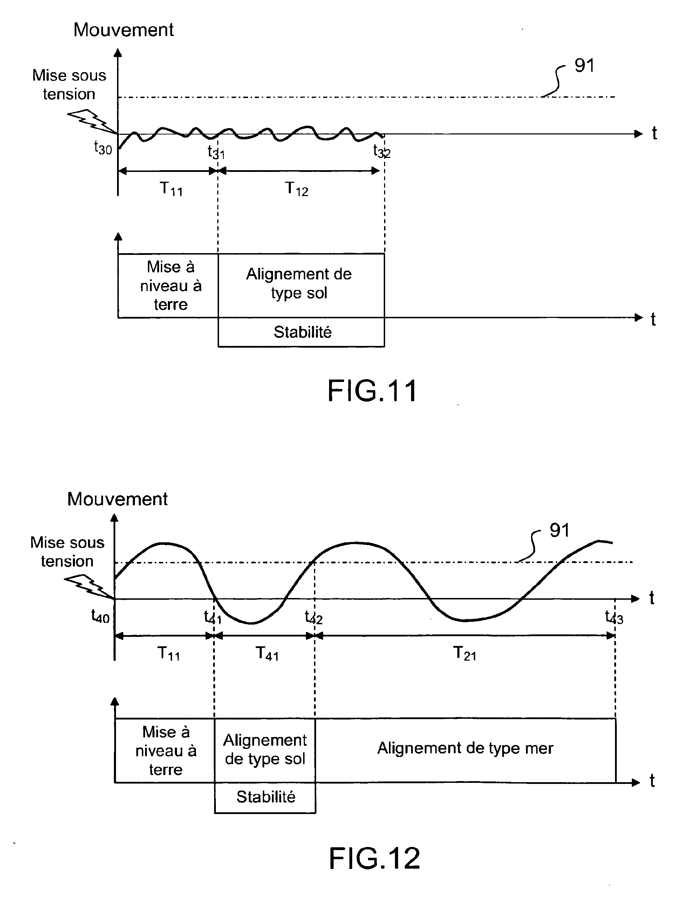

Selon un deuxième mode de réalisation, illustré par les figures 11 et 12, dans le cas où l'aéronef 20 n'est pas détecté en vol, les étapes suivantes sont effectuées successivement :
- effectuer la mise à niveau à terre,
- simultanément :
   o effectuer l'alignement de type sol 54,
   o déterminer la stabilité de l'aéronef 20 pendant toute la durée de l'alignement de type sol 54,
- dans le cas où l'aéronef 20 est détecté en mer :
   o abandonner l'alignement de type sol 54,
   o effectuer l'alignement de type mer 55.

Comme représenté à la figure 11, à la mise sous tension 41 de l'instrument de secours 1 à un instant t₃₀, on effectue la mise à niveau à terre pendant la durée T₁₁. A l'issue de cette mise à niveau à terre, à un instant t₃₁, on effectue un alignement de type sol 54 et on détermine la stabilité de l'aéronef 20 pendant la durée T₁₂ jusqu'à un instant t₃₂, aucun mouvement n'ayant dépassé le seuil prédéfini 91.

Selon la figure 12, on effectue pareillement la mise à niveau à terre pendant la durée T₁₁ après la mise sous tension 41 à un instant t₄₀. A l'issue de cette mise à niveau à terre, à un instant t₄₁, on effectue un alignement de type sol 54 pendant une durée T₄₁ et on détermine la stabilité de l'aéronef 20 jusqu'à un instant t₄₂ où un mouvement dépasse le seuil prédéfini 91. A partir de cet instant t₄₂, on abandonne l'alignement de type sol 54 et la détermination de la stabilité de l'aéronef 20 et on effectue un alignement de type mer 55 pendant la durée T₂₁ jusqu'à un instant t₄₃.

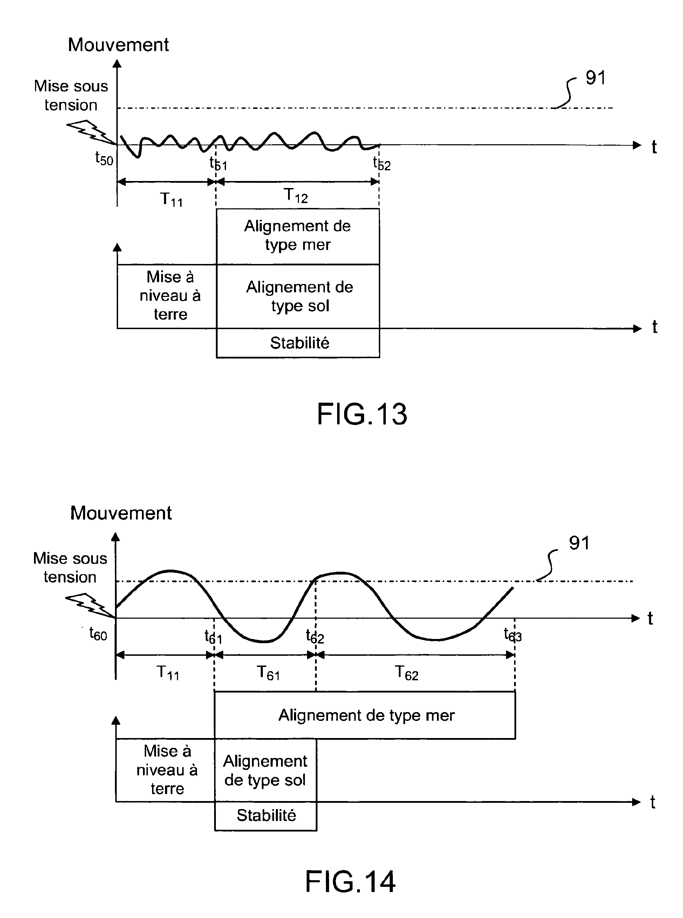

Selon un troisième mode de réalisation, illustré par les figures 13 et 14, dans le cas où l'aéronef 20 n'est pas détecté en vol, les étapes suivantes sont effectuées successivement :
- effectuer la mise à niveau à terre,
- simultanément :
   o effectuer l'alignement de type sol 54,
   o effectuer l'alignement de type mer 55,
   o déterminer la stabilité de l'aéronef 20 pendant toute la durée de l'alignement de type sol 54,
- dans le cas où l'aéronef 20 est détecté en mer :
   o abandonner l'alignement de type sol 54, l'alignement de type mer 55 étant alors utilisé,
- dans le cas contraire :
   o abandonner l'alignement de type mer 55, l'alignement de type sol 54 étant alors utilisé.

Comme représenté à la figure 13, à la mise sous tension 41 de l'instrument de secours 1 à un instant t₅₀, on effectue la mise à niveau à terre pendant la durée T₁₁. A l'issue de cette mise à niveau à terre, à un instant t₅₁, on effectue simultanément un alignement de type sol 54 et un alignement de type mer 55 et on détermine la stabilité de l'aéronef 20 pendant la durée T₁₂ jusqu'à un instant t₅₂, aucun mouvement n'ayant dépassé le seuil prédéfini 91.

Selon la figure 14, on effectue pareillement la mise à niveau à terre pendant la durée T₁₁ après la mise sous tension 41 à un instant t₆₀. A l'issue de cette mise à niveau à terre, à un instant t₆₁, on effectue simultanément un alignement de type sol 54 et un alignement de type mer 55 et on détermine la stabilité de l'aéronef 20 pendant une durée T₆₁ jusqu'à un instant t₆₂ où un mouvement dépasse le seuil prédéfini 91. A partir de cet instant t₆₂, on abandonne l'alignement de type sol 54 et la détermination de la stabilité de l'aéronef 20 et on poursuit l'alignement de type mer 55 pendant une durée T₆₂ jusqu'à un instant t₆₃, la somme des durées T₆₁ et T₆₂ étant égale à la durée T₂₁ de l'alignement de type mer 55.

Ce troisième mode de réalisation permet d'optimiser la durée de l'alignement de l'unité de mesure inertielle tout en déterminant la stabilité de l'aéronef 20 pendant cette durée d'alignement.

## Revendications

1. Procédé d'alignement autonome d'unité de mesure inertielle pour instrument de bord pouvant équiper un aéronef (20), **caractérisé en ce qu'**il comprend les étapes suivantes :
- déterminer un état de l'aéronef (20), à savoir si l'aéronef (20) est en vol ou non,
- dans le cas où l'aéronef (20) est détecté en vol :
o effectuer un alignement de type vol (52),
- dans le cas où l'aéronef (20) n'est pas détecté en vol :
o déterminer une stabilité de l'aéronef (20), à savoir si l'aéronef (20) est au sol ou en mer,
o dans le cas où l'aéronef (20) est détecté au sol :
■ effectuer un alignement de type sol (54),
o dans le cas où l'aéronef (20) est détecté en mer :
■ effectuer un alignement de type mer (55).

2. Procédé selon la revendication 1, **caractérisé en ce que** l'unité de mesure inertielle comprend des gyromètres (30) et **en ce que** l'alignement de type vol (52), l'alignement de type sol (54) et l'alignement de type mer (55) comprennent une étape de détermination d'une dérive interne de chaque gyromètre (30).

3. Procédé selon l'une des revendications précédentes, **caractérisé en ce que** l'état de l'aéronef (20) est déterminé par une information provenant d'un train d'atterrissage de l'aéronef (20) et indiquant si des roues du train d'atterrissage sont en contact avec un support et/ou par une vitesse air.

4. Procédé selon l'une des revendications précédentes, **caractérisé en ce que** la stabilité de l'aéronef (20) est déterminée par un accéléromètre (31) et/ou un gyromètre (30).

5. Procédé selon l'une des revendications précédentes, **caractérisé en ce que** la stabilité de l'aéronef (20) est déterminée par la présence ou l'absence d'une rotation autour d'un axe de lacet de l'aéronef (20) et/ou d'une translation suivant l'axe de lacet de l'aéronef (20), un axe de roulis et/ou un axe de tangage de l'aéronef (20).

6. Procédé selon la revendication 5, **caractérisé en ce que** la présence ou l'absence de la rotation et/ou de la translation est déterminée par un seuil prédéfini (91).

7. Procédé selon l'une des revendications précédentes, **caractérisé en ce que** l'alignement de type vol (52) comprend les étapes suivantes :
- déterminer un temps écoulé (T) entre une mise sous tension (41) de l'instrument de bord et une mise hors tension précédant immédiatement la mise sous tension (41),
- dans le cas où ce temps (T) est inférieur à une durée (τ) prédéterminée :
o effectuer un alignement court (63),
- dans le cas contraire :
o effectuer un alignement long (64).

8. Procédé selon la revendication 7, **caractérisé en ce que** l'alignement court (63) comprend une étape consistant à réutiliser des dérives internes 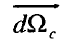 de l'unité de mesure inertielle précédemment déterminées.

9. Procédé selon l'une des revendications 7 ou 8, **caractérisé en ce que** l'alignement long (64) comprend une étape (71) de détermination de valeurs minimales (82) et maximales (83) de dérives internes 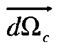 de l'unité de mesure inertielle et une étape (72) de détermination précise de ces dérives internes 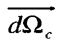 .

10. Procédé selon la revendication 9, **caractérisé en ce que** l'étape (72) de détermination précise des dérives internes 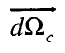 dans le cadre de l'alignement long (64) ne prend pas en compte des dérives instantanées de l'unité de mesure inertielle non comprises entre les valeurs minimales (82) et maximales (83) des dérives internes 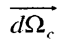 .

11. Procédé selon l'une des revendications 7 à 10, **caractérisé en ce que** l'alignement de type sol (54), l'alignement de type mer (55) et l'alignement long (64) se déroulent chacun pendant une durée (T₁₂, T₂₁) prédéterminée et **en ce que** les durées (T₂₁) de l'alignement de type mer (55) et de l'alignement long sont supérieures à la durée (T₁₂) de l'alignement de type sol (54) pour pouvoir moyenner des mouvements de l'aéronef (20).

12. Procédé selon l'une des revendications précédentes, **caractérisé en ce que**, dans le cas où l'aéronef (20) n'est pas détecté en vol, il comprend, en outre, une étape de détermination de valeurs minimales et maximales de dérives internes 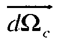 de l'unité de mesure inertielle.

13. Procédé selon la revendication 12, **caractérisé en ce que**, dans le cas où l'aéronef (20) n'est pas détecté en vol, les étapes suivantes sont effectuées successivement :
- simultanément :
o déterminer les valeurs minimales et maximales des dérives internes 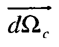 de l'unité de mesure inertielle,
o déterminer la stabilité de l'aéronef (20) pendant toute la durée (T₁₁) de détermination des valeurs minimales et maximales des dérives internes 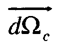 de l'unité de mesure inertielle,
- dans le cas où l'aéronef (20) est détecté en mer :
o effectuer l'alignement de type mer (55),
- dans le cas contraire :
o effectuer l'alignement de type sol (54).

14. Procédé selon la revendication 12, **caractérisé en ce que**, dans le cas où l'aéronef (20) n'est pas détecté en vol, les étapes suivantes sont effectuées successivement :
- déterminer les valeurs minimales et maximales des dérives internes 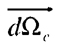 de l'unité de mesure inertielle,
- simultanément :
o effectuer l'alignement de type sol (54),
o déterminer la stabilité de l'aéronef (20) pendant toute la durée de l'alignement de type sol (54),
- dans le cas où l'aéronef (20) est détecté en mer :
o abandonner l'alignement de type sol (54),
o effectuer l'alignement de type mer (55).

15. Procédé selon la revendication 12, **caractérisé en ce que**, dans le cas où l'aéronef (20) n'est pas détecté en vol, les étapes suivantes sont effectuées successivement :
- déterminer les valeurs minimales et maximales des dérives internes 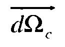 de l'unité de mesure inertielle,
- simultanément :
o effectuer l'alignement de type sol (54),
o effectuer l'alignement de type mer (55),
o déterminer la stabilité de l'aéronef (20) pendant toute la durée (T₁₂, T₆₁) de l'alignement de type sol (54),
- dans le cas où l'aéronef (20) est détecté en mer :
o abandonner l'alignement de type sol (54), l'alignement de type mer (55) étant alors utilisé,
- dans le cas contraire :
o abandonner l'alignement de type mer (55), l'alignement de type sol (54) étant alors utilisé.

16. Procédé selon l'une des revendications précédentes, **caractérisé en ce que** l'instrument de bord est un instrument de secours (1) générant et affichant des informations de vitesse, d'altitude et d'attitude de l'aéronef (20).

## Claims

1. A method for independent alignment of an inertial measurement unit for an onboard instrument which can equip an aircraft (20), **characterized in that** it comprises the following steps:
- determining a status of the aircraft (20), that is to say whether or not the aircraft (20) is in flight,
- in the case where the aircraft (20) is detected as being in flight:
o carrying out a flight alignment (52),
- in the case where the aircraft (20) is not detected as being in flight:
o determining a stability of the aircraft (20), that is to say whether the aircraft (20) is on the ground or at sea,
o in the case where the aircraft (20) is detected as being on the ground:
■ carrying out a ground alignment (54),
o in the case where the aircraft (20) is detected as being at sea:
■ carrying out a sea alignment (55).

2. The method as claimed in claim 1, **characterized in that** the inertial measurement unit comprises gyrometers (30) and **in that** the flight alignment (52), the ground alignment (54) and the sea alignment (55) comprise a step of determination of an internal drift of each gyrometer (30).

3. The method as claimed in one of the preceding claims, **characterized in that** the status of the aircraft (20) is determined by an item of information coming from landing gear of the aircraft (20) and indicating if the wheels of the landing gear are in contact with a support and/or by an airspeed.

4. The method as claimed in one of the preceding claims, **characterized in that** the stability of the aircraft (20) is determined by an accelerometer (31) and/or a gyrometer (30).

5. The method as claimed in one of the preceding claims, **characterized in that** the stability of the aircraft (20) is determined by the presence or the absence of a rotation about a yaw axis of the aircraft (20) and/or a translation along the yaw axis of the aircraft (20), a roll axis and/or a pitch axis of the aircraft (20).

6. The method as claimed in claim 5, **characterized in that** the presence or the absence of the rotation and/or the translation is determined by a predetermined threshold (91).

7. The method as claimed in one of the preceding claims, **characterized in that** the flight alignment (52) comprises the following steps:
- determining a time (T) elapsed between a switching on (41) of the onboard instrument and a switching off immediately preceding that switching on (41),
- in the case in which that time (T) is less than a predetermined duration (τ):
o carrying out a short alignment (63),
in the contrary case:
o carrying out a long alignment (64).

8. The method as claimed in claim 7, **characterized in that** the short alignment (63) comprises a step consisting in reusing the previously determined internal drifts 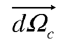 of the inertial measurement unit.

9. The method as claimed in one of claims 7 or 8, **characterized in that** the long alignment (64) comprises a step (71) of determination of minimal (82) and maximal (83) values of internal drifts 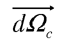 of the inertial measurement unit and a step (72) of precise determination of these internal drifts 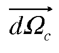 .

10. The method as claimed in claim 9, **characterized in that** the step (72) of precise determination of the internal drifts 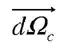 in the context of the long alignment (64) does not take account of the instantaneous drifts of the inertial measurement unit not included between the minimal (82) and maximal (83) values of the internal drifts 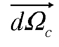 .

11. The method as claimed in one of claims 7 to 10, **characterized in that** the ground alignment (54), the sea alignment (55) and the long alignment (64) each take place over a predetermined duration (T₁₂, T₂₁) and **in that** the durations (T₂₁) of the sea alignment (55) and of the long alignment are greater than the duration (T₁₂) of the ground alignment (54) in order to be able to average the movements of the aircraft (20).

12. The method as claimed in one of the preceding claims, **characterized in that**, in the case where the aircraft (20) is not detected as being in flight, it furthermore comprises a step of determination of minimal and maximal values of internal drifts 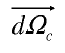 of the inertial measurement unit.

13. The method as claimed in claim 12, **characterized in that**, in the case where the aircraft (20) is not detected as being in flight, the following steps are carried out successively:
- simultaneously:
o determining the minimal and maximal values of the internal drifts 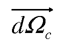 of the inertial measurement unit,
o determining the stability of the aircraft (20) throughout the whole of the duration (T₁₁) of determination of the minimal and maximal values of the internal drifts 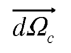 of the inertial measurement unit,
- in the case where the aircraft (20) is detected as being at sea:
o carrying out a sea alignment (55),
- in the contrary case:
o carrying out a ground alignment (54).

14. The method as claimed in claim 12, **characterized in that**, in the case where the aircraft (20) is not detected as being in flight, the following steps are carried out successively:
- determining the minimal and maximal values of the internal drifts 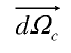 of the inertial measurement unit,
- simultaneously:
o carrying out a sea alignment (54),
o determining the stability of the aircraft (20) throughout the whole of the duration of the ground alignment (54),
- in the case where the aircraft (20) is detected as being at sea:
o abandoning the ground alignment (54),
o carrying out a sea alignment (55).

15. The method as claimed in claim 12, **characterized in that**, in the case where the aircraft (20) is not detected as being in flight, the following steps are carried out successively:
- determining the minimal and maximal values of the internal drifts 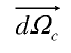 of the inertial measurement unit,
- simultaneously:
o carrying out a ground alignment (54),
o carrying out a sea alignment (55),
o determining the stability of the aircraft (20) throughout the whole of the duration (T₁₂, T₆₁) of the ground alignment (54),
- in the case where the aircraft (20) is detected as being at sea:
o abandoning the ground alignment (54), the sea alignment (55) then being used,
- in the contrary case,
o abandoning the sea alignment (55), the ground alignment (54) then being used.

16. The method as claimed in one of the preceding claims, **characterized in that** the onboard instrument is a stand-by instrument (1) generating and displaying speed, altitude and attitude information of the aircraft (20).

## Patentansprüche

1. Verfahren zum unabhängigen Ausrichten einer Trägheitsmesseinheit für ein Bordinstrument (20), mit dem ein Luftfahrzeug (20) ausgestattet sein kann, **dadurch gekennzeichnet, dass** es die folgenden Schritte beinhaltet:
- Ermitteln eines Zustands des Luftfahrzeugs (20), d.h. ob das Luftfahrzeug (20) im Flug ist oder nicht,
- falls festgestellt wird, dass das Luftfahrzeug (20) im Flug ist:
* Bewirken einer Ausrichtung des Flugtyps (52);
- falls festgestellt wird, dass das Luftfahrzeug (20) nicht im Flug ist:
* Ermitteln der Stabilität des Luftfahrzeugs (20), d.h. ob das Luftfahrzeug (20) auf dem Boden oder auf dem Wasser ist,
* falls festgestellt wird, dass das Luftfahrzeug (20) auf dem Boden ist:
• Bewirken einer Ausrichtung des Bodentyps (54),
* falls festgestellt wird, dass das Luftfahrzeug (20) auf dem Wasser ist:
• Bewirken einer Ausrichtung des Wassertyps (55).

2. Verfahren nach Anspruch 1, **dadurch gekennzeichnet, dass** die Trägheitsmesseinheit Gyrometer (30) umfasst, und **dadurch**, dass die Ausrichtung des Flugtyps (52), die Ausrichtung des Bodentyps (54) und die Ausrichtung des Wassertyps (55) einen Schritt des Ermittelns einer internen Messabweichung jedes Gyrometers (30) beinhalten.

3. Verfahren nach einem der vorherigen Ansprüche, **dadurch gekennzeichnet, dass** der Zustand des Luftfahrzeugs (20) anhand einer Information ermittelt wird, die von einem Fahrwerk des Luftfahrzeugs (20) kommt und anzeigt, ob die Räder des Fahrwerks mit einer Unterkonstruktion in Kontakt sind, und/oder anhand der Luftgeschwindigkeit.

4. Verfahren nach einem der vorherigen Ansprüche, **dadurch gekennzeichnet, dass** die Stabilität des Luftfahrzeugs (20) mit Hilfe eines Beschleunigungsmessers (31) und/oder eines Gyrometers (30) ermittelt wird.

5. Verfahren nach einem der vorherigen Ansprüche, **dadurch gekennzeichnet, dass** die Stabilität des Luftfahrzeugs (20) anhand der An- oder Abwesenheit einer Rotation um eine Gierachse des Luftfahrzeugs (20) und/oder einer Translation entlang der Gierachse des Luftfahrzeugs (20), einer Rollachse und/oder einer Nickachse des Luftfahrzeugs (20) ermittelt wird.

6. Verfahren nach Anspruch 5, **dadurch gekennzeichnet, dass** die An- oder Abwesenheit der Rotation und/oder der Translation anhand eines vordefinierten Schwellenwerts (91) ermittelt wird.

7. Verfahren nach einem der vorherigen Ansprüche, **dadurch gekennzeichnet, dass** die Ausrichtung des Flugtyps (52) die folgenden Schritte beinhaltet:
- Ermitteln einer verstrichenen Zeit (T) zwischen dem Einschalten (41) des Bordinstruments und einem Ausschalten, das dem Einschalten (41) unmittelbar vorangeht,
- falls diese Zeit (T) kürzer ist als eine vorbestimmte Dauer (τ):
* Bewirken einer Kurzausrichtung (63),
- im gegenteiligen Fall:
* Bewirken einer Langausrichtung (64).

8. Verfahren nach Anspruch 7, **dadurch gekennzeichnet, dass** die Kurzausrichtung (63) einen Schritt beinhaltet, der darin besteht, zuvor ermittelte interne Messabweichungen 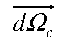 der Trägheitsmesseinheit wiederzuverwenden.

9. Verfahren nach Anspruch 7 oder 8, **dadurch gekennzeichnet, dass** die Langausrichtung (64) einen Schritt (71) des Ermittelns von Mindestwerten (82) und Höchstwerten (83) der internen Messabweichungen 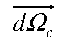 der Trägheitsmesseinheit und einen Schritt (72) des präzisen Ermittelns dieser internen Messabweichungen 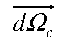 beinhaltet.

10. Verfahren nach Anspruch 9, **dadurch gekennzeichnet, dass** der Schritt (72) des präzisen Ermittelns der internen Messabweichungen 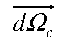 im Rahmen der Langausrichtung (64) keine momentanen Messabweichungen der Trägheitsmesseinheit berücksichtigt, die nicht zwischen den Mindestwerten (82) und den Höchstwerten (83) von internen Messabweichungen 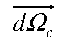 liegen.

11. Verfahren nach einem der Ansprüche 7 bis 10, **dadurch gekennzeichnet, dass** die Ausrichtung des Bodentyps (54), die Ausrichtung des Wassertyps (55) und die Langausrichtung (64) für eine vorbestimmte Dauer (T₁₂, T₂₁) ablaufen, und **dadurch**, dass die Dauern (T₂₁) der Ausrichtung des Wassertyps (55) und der Langausrichtung länger sind als die Dauer (T₁₂) der Ausrichtung des Bodentyps (54), um die Bewegungen des Luftfahrzeugs (20) mitteln zu können.

12. Verfahren nach einem der vorherigen Ansprüche, **dadurch gekennzeichnet, dass** es, falls festgestellt wird, dass das Luftfahrzeug (20) nicht im Flug ist, darüber hinaus einen Schritt des Ermittelns von Mindestwerten und Höchstwerten von internen Messabweichungen 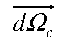 der Trägheitsmesseinheit beinhaltet.

13. Verfahren nach Anspruch 12, **dadurch gekennzeichnet, dass**, falls festgestellt wird, dass das Luftfahrzeug (20) nicht im Flug ist, die folgenden Schritte nacheinander ausgeführt werden:
- gleichzeitig:
* Ermitteln der Mindest- und Höchstwerte von internen Messabweichungen 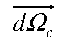 der Trägheitsmesseinheit,
* Ermitteln der Stabilität des Luftfahrzeugs (20) während der gesamten Dauer (T₁₁) der Ermittlung der Mindest- und Höchstwerte von internen Messabweichungen 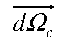 der Trägheitsmesseinheit,
- falls festgestellt wird, dass das Luftfahrzeug (20) auf dem Wasser ist:
* Bewirken einer Ausrichtung des Wassertyps (55),
- im gegenteiligen Fall:
* Bewirken einer Ausrichtung des Bodentyps (54).

14. Verfahren nach Anspruch 12, **dadurch gekennzeichnet, dass**, falls festgestellt wird, dass das Luftfahrzeug (20) nicht im Flug ist, die folgenden Schritte nacheinander ausgeführt werden:
- Ermitteln der Mindest- und Höchstwerte von internen Messabweichungen 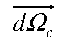 der Trägheitsmesseinheit,
- gleichzeitig:
* Bewirken der Ausrichtung des Bodentyps (54),
* Ermitteln der Stabilität des Luftfahrzeugs (20) für die gesamte Dauer der Ausrichtung des Bodentyps (54),
- falls festgestellt wird, dass das Luftfahrzeug (20) auf dem Wasser ist:
* Abbrechen des Ausrichtens des Bodentyps (55),
* Bewirken der Ausrichtung des Wassertyps (55).

15. Verfahren nach Anspruch 12, **dadurch gekennzeichnet, dass**, falls nicht festgestellt wird, dass das Luftfahrzeug (20) im Flug ist, die folgenden Schritte nacheinander ausgeführt werden:
- Ermitteln der Mindest- und Höchstwerte von internen Messabweichungen 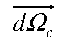 der Trägheitsmesseinheit,
- gleichzeitig:
* Bewirken der Ausrichtung des Bodentyps (54),
* Bewirken der Ausrichtung des Wassertyps (55),
* Ermitteln der Stabilität des Luftfahrzeugs (20) für die gesamte Dauer (T₁₂, T₆₁) der Ausrichtung des Bodentyps (54),
- falls festgestellt wird, dass das Luftfahrzeug (20) auf dem Wasser ist:
* Abbrechen der Ausrichtung des Bodentyps (54), wobei dann die Ausrichtung des Wassertyps (55) erfolgt,
- im gegenteiligen Fall:
* Abbrechen der Ausrichtung des Wassertyps (55), wobei dann die Ausrichtung des Bodentyps (54) erfolgt.

16. Verfahren nach einem der vorherigen Ansprüche, **dadurch gekennzeichnet, dass** das Bordinstrument ein Notinstrument (1) ist, das Informationen zu Geschwindigkeit, Höhe und Lage des Luftfahrzeugs (20) erzeugt und anzeigt.
